# EUROPEAN PATENT APPLICATION

(11) **EP 4 737 177 A1**
(43) Date of publication of application: **06.05.2026**
(21) Application number: 24831448.6
(22) Date of filing: 14.05.2024
(51) Int. Cl.: B60K 15/01, B60K 1/00, B60K 15/07

(54) **WORK VEHICLE**

(30) Priority: 30.06.2023 JP 2023107681
(71) Applicant: Kubota Corporation, Osaka 556-8601 (JP)
(72) Inventor: HORIIKE, Kohei, Sakai-shi, Osaka 590-0908 (JP)
(74) Representative: Cabinet Beau de Loménie
(86) International application number: PCT/JP2024/017825
(87) International publication number: WO 2025/004575

(57) **Abstract**

A work vehicle 10 includes: a vehicle body 11; a tank unit 21 including a tank 13 configured to store hydrogen gas, the tank unit 21 being disposed above the vehicle body 11; a fuel cell installed on the vehicle body 11; and a pipe 22 for hydrogen gas, the pipe 22 connecting the tank 13 and the fuel cell. The tank unit 21 has a pipe region 23 where the pipe 22 connected to the tank 13 passes, the pipe region 23 being located in a lower portion 21b of the tank unit 21.

## Description

### TECHNICAL FIELD

The present invention relates to a work vehicle. The present application claims priority to Japanese Patent Application No. 2023-107681 filed on June 30, 2023, the entire disclosure of which is hereby incorporated by reference.

### BACKGROUND ART

Patent Literature 1 discloses a work vehicle including a tank configured to store hydrogen gas, a fuel cell, and a motor. The fuel cell generates electric power from the hydrogen gas supplied from the tank, and the motor rotates using the electric power. The work vehicle travels using the torque from the motor as a driving force.

### CITATION LIST

### [PATENT LITERATURE]

PATENT LITERATURE 1: Japanese Laid-Open Patent Publication No. 2023-13186

### SUMMARY OF THE INVENTION

A work vehicle according to an aspect of the present disclosure includes: a vehicle body; a tank unit including a tank configured to store hydrogen gas, the tank unit being disposed above the vehicle body; a fuel cell installed on the vehicle body; and a pipe for hydrogen gas, the pipe connecting the tank and the fuel cell, and the tank unit has a pipe region where the pipe connected to the tank passes, the pipe region being located in a lower portion of the tank unit.

### BRIEF DESCRIPTION OF DRAWINGS

[FIG. 1] FIG. 1 is a perspective view illustrating a work vehicle according to an embodiment of the present disclosure.
[FIG. 2] FIG. 2 is a front view of the work vehicle illustrated in FIG. 1.
[FIG. 3] FIG. 3 is a rear view of the work vehicle illustrated in FIG. 1.
[FIG. 4] FIG. 4 is a side view of the work vehicle illustrated in FIG. 1.
[FIG. 5] FIG. 5 is a side view of the work vehicle illustrated in FIG. 1.
[FIG. 6] FIG. 6 is a plan view of the work vehicle illustrated in FIG. 1.
[FIG. 7] FIG. 7 is a bottom view of the work vehicle illustrated in FIG. 1.
[FIG. 8] FIG. 8 is a partially exploded perspective view of the work vehicle illustrated in FIG. 1.
[FIG. 9] FIG. 9 is a side view of the work vehicle from which a hood and the like are removed.
[FIG. 10] FIG. 10 is a perspective view of a vehicle body from which a right rear wheel is removed.
[FIG. 11] FIG. 11 is a side view of the work vehicle illustrated in FIG. 5, from which a rear wheel and a front frame portion are removed.
[FIG. 12] FIG. 12 is an explanatory view of a filling unit attached to a bracket and its surroundings.
[FIG. 13] FIG. 13 is an explanatory view of a fuel cell and a discharge path.
[FIG. 14] FIG. 14 is a perspective view of a battery unit and a discharge pipe supported by a support structure.
[FIG. 15] FIG. 15 is an exploded perspective view of the battery unit, the discharge pipe, and the support structure.
[FIG. 16] FIG. 16 is a front view of the battery unit and the discharge pipe supported by the support structure.
[FIG. 17] FIG. 17 is a front view illustrating the support structure and the battery unit separated from the support structure.

### DETAILED DESCRIPTION

### <Problems to be solved by the present disclosure>

A tank configured to store hydrogen gas is disposed above a vehicle body. A fuel cell and an installed component for hydrogen, such as a filling port, for filling hydrogen gas are installed on the vehicle body. The tank and the installed component for hydrogen are connected to each other using a pipe. The pipe is preferably short in length as much as possible.

Hence, an object of the present disclosure is to provide a work vehicle that enables a reduction in length of a pipe as much as possible, the pipe being connected to a tank configured to store hydrogen gas.

### <Advantageous effect of the present disclosure>

According to a work vehicle of the present disclosure, it is possible to reduce a length of a pipe for hydrogen gas as much as possible.

### <Outline of embodiments of the present disclosure>

An outline of below-listed embodiments of the present disclosure is described.
(1) A work vehicle of the present embodiment includes: a vehicle body; a tank unit including a tank configured to store hydrogen gas, the tank unit being disposed above the vehicle body; a fuel cell installed on the vehicle body; and a pipe for hydrogen gas, the pipe connecting the tank and the fuel cell, and the tank unit has a pipe region where the pipe connected to the tank passes, the pipe region being located in a lower portion of the tank unit.
   According to the work vehicle having this configuration, the tank unit is disposed above the vehicle body. The pipe region is located in the lower portion of the tank unit. It is possible to bring the pipe region in the tank unit close to the fuel cell on the vehicle body as much as possible, thereby reducing the length of the pipe for hydrogen gas as much as possible.
(2) Preferably, the work vehicle includes a front pipe, as the pipe, connected to the fuel cell via the pipe region in the lower portion and a front portion of the tank unit.
   According to this configuration, it is possible to reduce the length of the front pipe connecting the tank and the fuel cell, as much as possible.
(3) Preferably, the work vehicle described in (1) or (2) includes a filling unit and a rear pipe connected to the filling unit via the pipe region in the lower portion and a rear portion of the tank unit.
   According to this configuration, it is possible to reduce a length of the rear pipe connecting the filling unit and the tank, as much as possible.
(4) Preferably, in the work vehicle described in (2), the vehicle body includes a cover covering an installed component located near a front of the vehicle body, and the cover has an opening through which the front pipe passes.
   According to this configuration, it is possible to lay out the front pipe efficiently as much as possible without a necessity for the front pipe to bypass the cover.
(5) Preferably, the work vehicle described in any one of (1) to (4) includes an installation frame with which the tank unit is installed on the vehicle body, the installation frame includes a frame member having a pillar shape, and the pipe is attached along a part of the frame member.
   According to this configuration, the installation frame is used for supporting the pipe between the tank unit and the installed component for hydrogen.
(6) Preferably, the work vehicle described in (5) includes a clamp member with which the pipe is fixed to a part of the frame member.
   The pipe is fixed to the frame member by the clamp member without positional deviation.
(7) Preferably, in the work vehicle described in (5), the frame member is a tubular member that is hollow, and at least a part of the pipe passes through the tubular member.
   According to this configuration, the frame member (the tubular member) functions as a cover for protecting the pipe.
(8) Preferably, the work vehicle described in (3) includes a frame coupled to the vehicle body, and the frame includes: a clamp member with which the rear pipe is attached to a part of the frame; and an attachment portion to which the filling unit is attached.
   According to this configuration, the frame coupled to the vehicle body serves as both a member for fixing the rear pipe using the clamp member and a member for attaching the filling unit.
(9) Preferably, in the work vehicle described in (8), the frame is a part of an installation frame with which the tank is installed on the vehicle body.
   According to this configuration, the installation frame, with which the tank unit is installed on the vehicle body, serves as a member for attaching the filling unit for hydrogen gas to the vehicle body.
(10) Preferably, in the work vehicle described in any one of (1) to (9), the pipe includes a flexible pipe as a part of the pipe.
   This configuration facilitates operation of attaching the pipe to the work vehicle. After the pipe is attached, even if an external force is applied to the pipe due to, for example, vibrations, the external force can be absorbed.
(11) Preferably, the work vehicle described in any one of (1) to (10) includes: a filling unit for hydrogen gas, the filling unit being located rearward of the tank; the fuel cell located forward of the tank; a rear pipe connecting the filling unit and the tank; and a front pipe connecting the tank and the fuel cell, the pipe region for the rear pipe is located on a first side in a vehicle-width direction, and the pipe region for the front pipe is located on a second side in the vehicle-width direction.
   According to this configuration, hydrogen gas filled by the filling unit flows through the rear pipe passing the pipe region on the first side in the vehicle-width direction, and then reaches the tank. The hydrogen gas supplied from the tank flows through the front pipe passing the pipe region on the second side in the vehicle-width direction, and then reaches the fuel cell. It is possible to efficiently lay out the rear pipe and the front pipe in the tank unit.

### <Details of embodiments of the present disclosure>

Details of embodiments of the present disclosure are described below with reference to the drawings. It should be noted that at least some of the embodiments described below may be arbitrarily combined with each other.

### [Overall configuration of work vehicle]

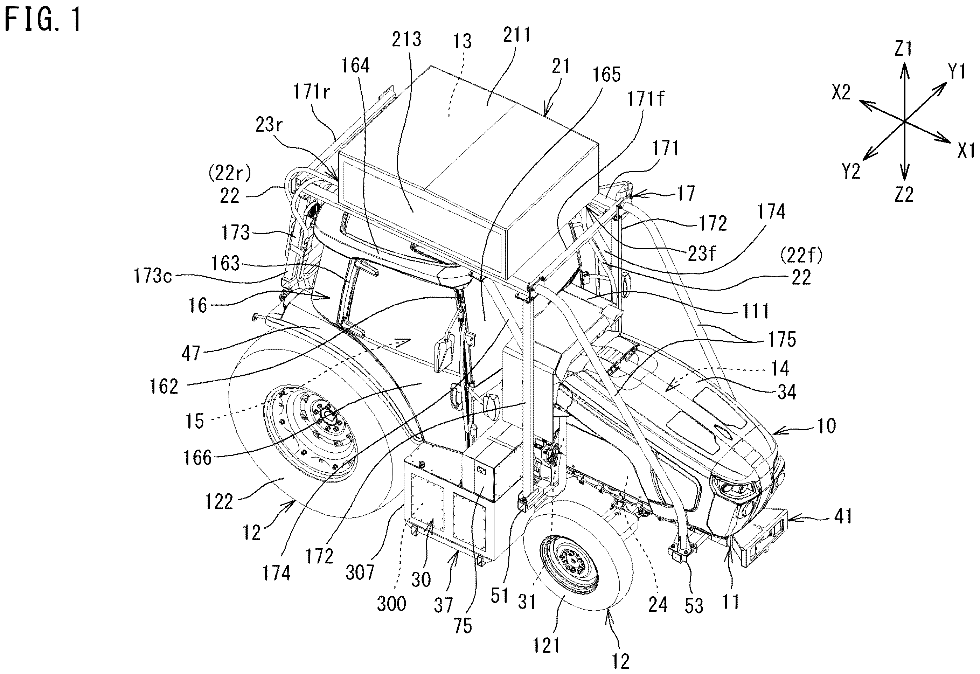

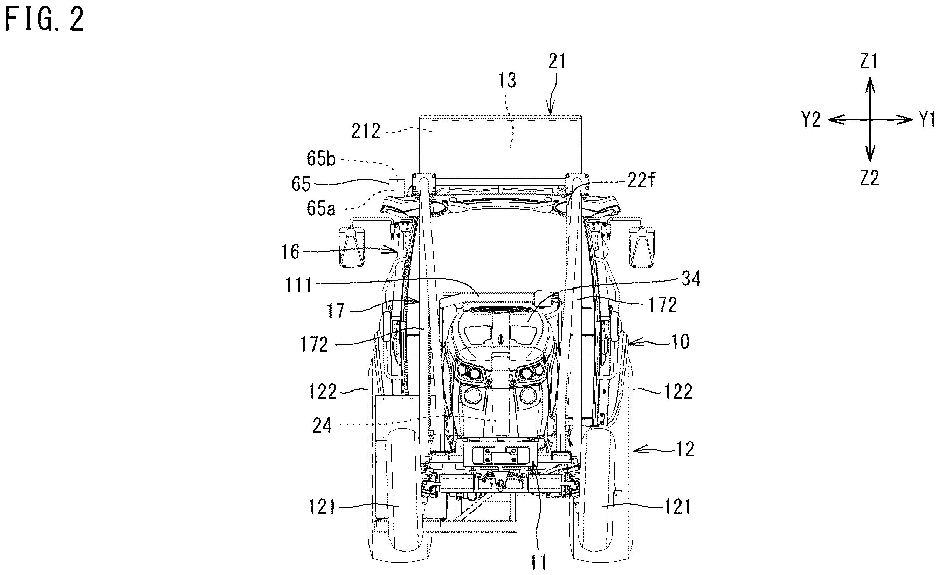

FIG. 1 is a perspective view illustrating a work vehicle according to an embodiment of the present disclosure. FIGs. 2, 3, 4, 5, 6, and 7 are respectively a front view, a rear view, a side view (a left side view), a side view (a right side view), a plan view, and a bottom view of the work vehicle illustrated in FIG. 1.

A work vehicle 10 of the present embodiment is a vehicle that can be used for farmwork. The work vehicle 10 illustrated in FIG. 1 is a tractor. The work vehicle is not limited to a tractor. Examples of the work vehicle according to the present invention may include an agricultural machine different from a tractor, a construction machine, a utility vehicle, and the like.

The following terminology defines the directions of the work vehicle 10 of the present disclosure. The term "front" refers to the direction in which the work vehicle 10 travels forward. The term "rear" refers to the direction in which the work vehicle 10 travels backward. The term "left" refers to the left side when the work vehicle 10 is directed forward. The term "right" refers to the right side when the work vehicle 10 is directed forward. The term "vehicle-width direction" refers to the left-right direction perpendicular to the front-rear direction. The term "up-down direction" refers to the direction perpendicular to both the front-rear direction and the vehicle-width direction (the left-right direction). The up-down direction is also referred to as the height direction.

Each drawing depicts orthogonal three-dimensional coordinates. In each drawing, arrow X1 indicates the forward direction, and arrow X2 indicates the rearward direction. Also in each drawing, arrow Y1 indicates the leftward direction, and arrow Y2 indicates the rightward direction. Also in each drawing, arrow Z1 indicates the upward direction, and arrow Z2 indicates the downward direction.

The work vehicle 10 illustrated in FIG. 1 includes a vehicle body 11, a traveling device 12 supporting the vehicle body 11 in a travelable manner, a driver's seat 15, a cabin 16, a tank unit 21 including a tank 13 configured to store fuel, and a drive device 14 to be driven using the fuel stored in the tank 13. The fuel is hydrogen. The tank 13 is a hydrogen tank configured to store hydrogen gas. The work vehicle 10 of the present embodiment is a fuel cell vehicle (FCV) and travels using electric power generated from hydrogen and oxygen by a fuel cell 24 (a fuel cell module).

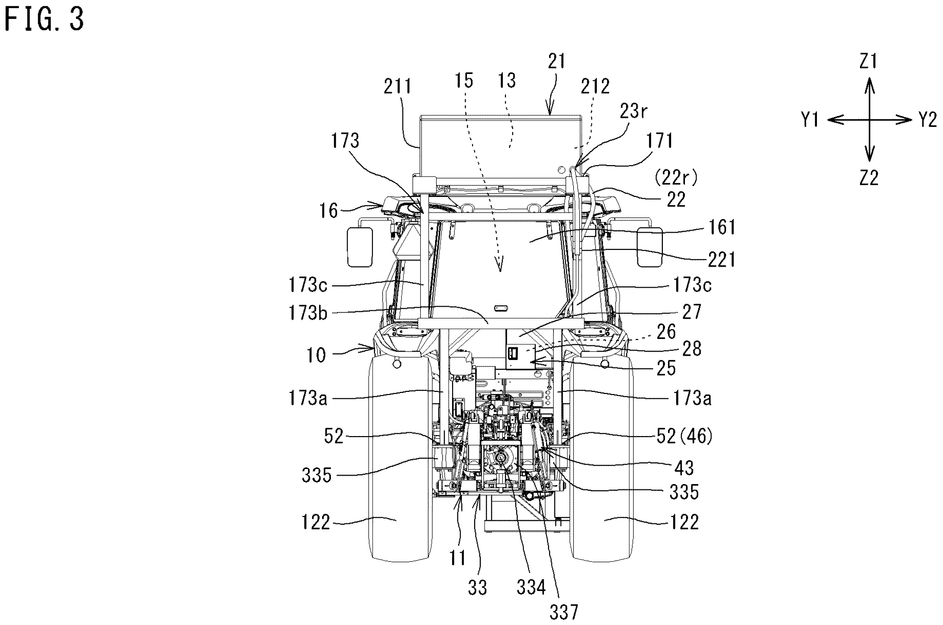

The work vehicle 10 includes, as the drive device 14, the fuel cell 24, a battery unit 30, and a motor 31 to be electrically driven. The battery unit 30 includes a battery 300 configured to store electric power generated by the fuel cell 24, and supplies the stored electric power to the motor 31. The work vehicle 10 includes pipes 22 for hydrogen gas (hydrogen pipes) and a filling unit 25 (see FIG. 3). The filling unit 25 has a filling port 26 (a receptacle) to which a filling nozzle of a hydrogen gas supply machine (not illustrated) is connected. The hydrogen gas supply machine is provided separately from the work vehicle 10. Hydrogen gas supplied from the hydrogen gas supply machine through the filling port 26 flows through one of the pipes 22 (a rear pipe 22r) and reaches the tank 13. The hydrogen gas stored in the tank 13 flows through the other pipe 22 (a front pipe 22f) and reaches the fuel cell 24. The specific configurations of the filling unit 25 and pipes 22 are described below.

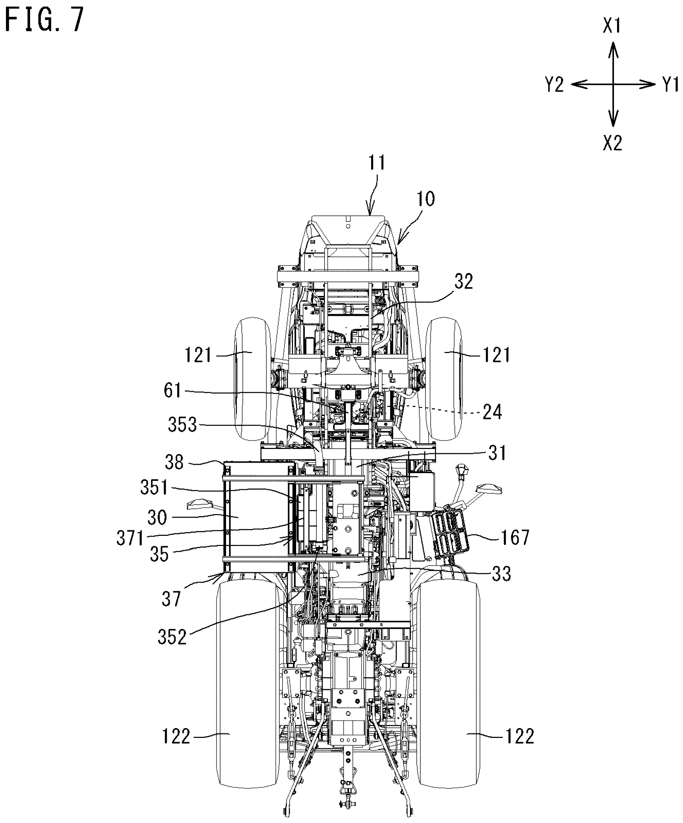

The work vehicle 10 (see FIG. 1) includes an installation frame 17 and a support structure 37. The installation frame 17 is a frame with which the tank unit 21 (the tank 13) is installed on the vehicle body 11. The support structure 37 is a component with which the battery unit 30 is supported on the vehicle body 11. The work vehicle 10 (see FIG. 7) includes a discharge path 35. The discharge path 35 serves as a path through which water or water vapor generated due to the operation of the fuel cell 24 is discharged externally. The specific configurations of the installation frame 17, support structure 37, and discharge path 35 are described below.

### [Vehicle body 11]

The vehicle body 11 includes a chassis 41, a hood 34, a cover 111, and fenders 47 with which rear wheels 122 are covered from above.

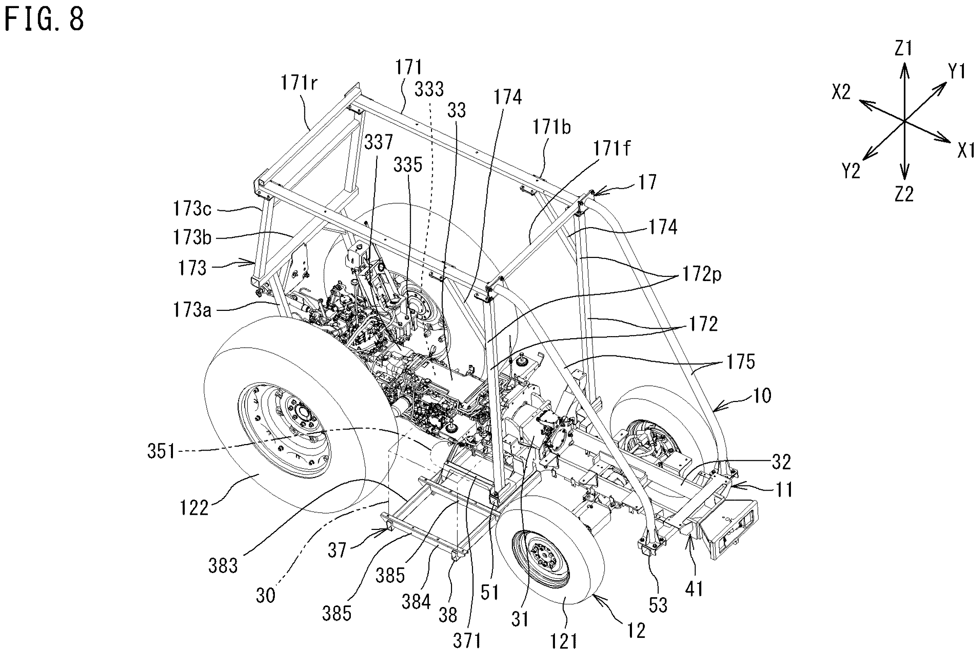

The chassis 41 supports the traveling device 12, the drive device 14, and the cabin 16. FIG. 8 is a partially exploded perspective view of the work vehicle 10 illustrated in FIG. 1. The chassis 41 is located at a center in the vehicle-width direction, and has a shape elongated in the vehicle front-rear direction. The chassis 41 includes a front frame 32 constituting a front portion of the chassis 41, and a gear case 33 constituting a rear portion of the chassis 41. The front frame 32 is a combination of, for example, frame members made of a metal, and has high rigidity. The gear case 33 has a box body made of a metal. The gear case 33 is coupled to a rear portion of the front frame 32. The gear case 33 and the front frame 32 cooperate to form a framework of the vehicle body 11.

The motor 31 is installed on the front frame 32. A power transmission mechanism 333 is accommodated in the gear case 33. The power transmission mechanism 333 includes a transmission, a clutch, a differential gear, and the like. The power transmission mechanism 333 decreases or increases a rotation speed of an output shaft of the motor 31, and outputs the resultant motive power to the traveling device 12 (front wheels 121 and/or the rear wheels 122).

The gear case 33 includes a main case 337 located at the center in the vehicle-width direction, and an axle case 335 for the rear wheels 122 located rearward of the main case 337 and on opposite sides in the vehicle-width direction. The main case 337 and the axle case 335 are each made of, for example, cast steel and each have high rigidity.

The power transmission mechanism 333 outputs part of the motive power from the motor 31 to a PTO shaft 334 (see FIG. 3). The PTO shaft 334 is an output shaft disposed on a rear portion of the gear case 33. The work vehicle 10 includes a coupling device 43 configured to couple a separate instrument to the rear of the vehicle body 11. The PTO shaft 334 transmits the motive power from the motor 31 to the separate instrument coupled to the coupling device 43. The separate instrument is a working device (not illustrated) and is also referred to as an implement. The working device is operated by the motive power from the motor 31. The working device is, for example, a cultivator.

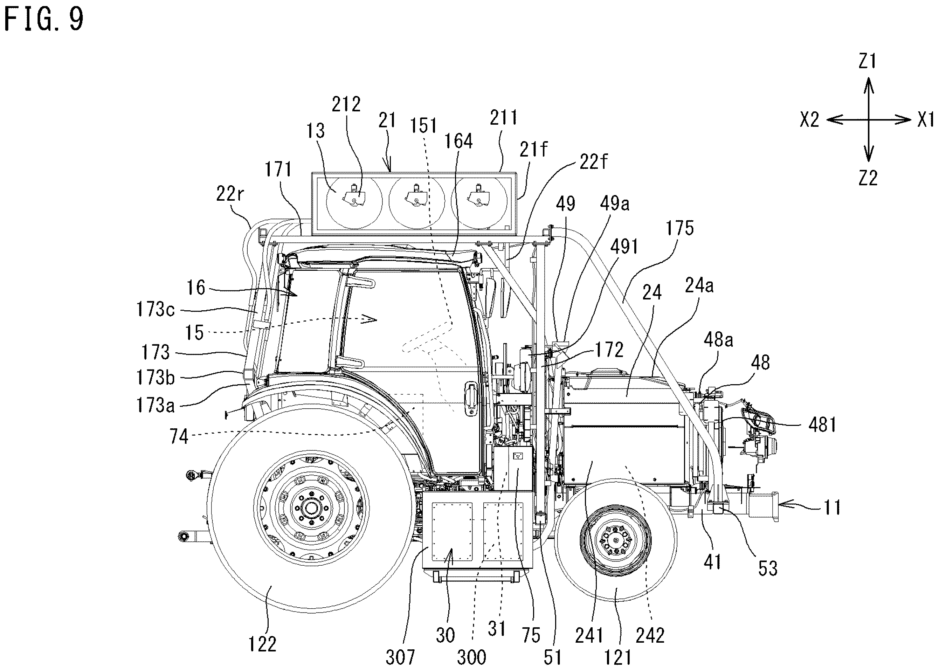

FIG. 9 is a left side view of the work vehicle 10, and illustrates the work vehicle 10 from which the hood 34, the cover 111, and a part of a tank case 211 of the tank unit 21 are removed. A first radiator 48, the fuel cell 24, and a second radiator 49 are arranged in this order from the front of the vehicle, and are installed on the chassis 41.

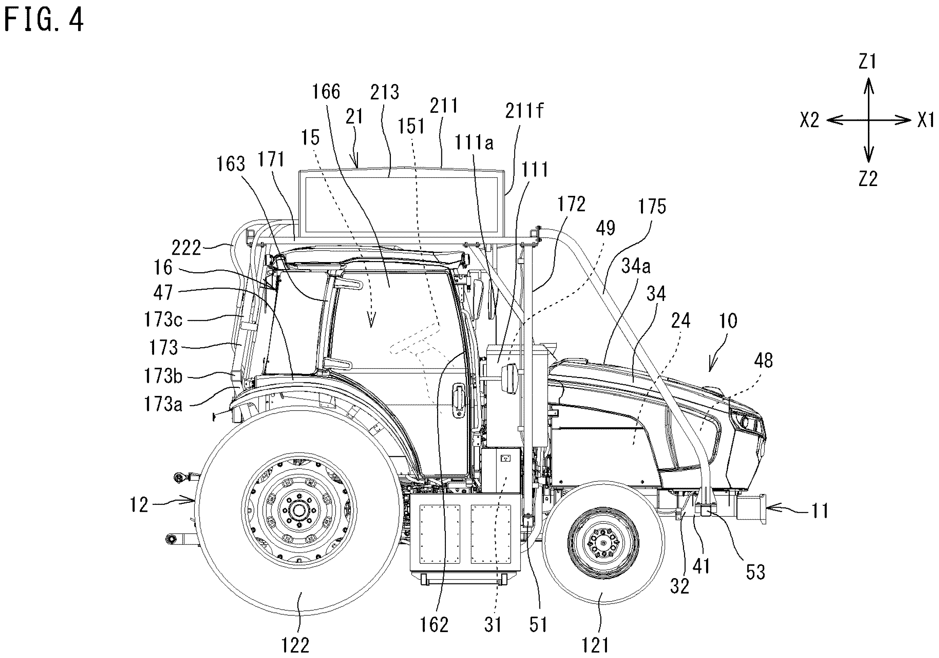

As illustrated in FIGs. 4 and 9, the hood 34 and the cover 111 cover the installed components located near the front of the vehicle body 11. The hood 34 covers the fuel cell 24 and the first radiator 48 from above and laterally in the vehicle-width direction. The cover 111 covers the second radiator 49, which is located rearward of the fuel cell 24, from above and laterally in the vehicle-width direction.

An upper surface 48a of the first radiator 48 is lower in height than an upper surface 24a of the fuel cell 24. The upper surface 24a of the fuel cell 24 is lower in height than an upper surface 49a of the second radiator 49.

An upper surface 111a of the cover 111 is higher in height than an upper surface 34a of the hood 34, but is lower in height than an upper end of a steering wheel 151 to be operated for the sake of steering by an operator sitting in the driver's seat 15. The upper surface 34a of the hood 34 is gradually inclined downward from the rear toward the front. This configuration is less likely to obstruct the field of view of the operator sitting in the driver's seat 15.

### [Driver's seat 15 and cabin 16]

The driver's seat 15 and the cabin 16 are disposed on the chassis 41 and located near the rear (see FIG. 1). The driver's seat 15 is located within the cabin 16.

The cabin 16 includes front pillars 162 located forward of the driver's seat 15, rear pillars 163 located rearward of the front pillars 162, and a roof 164 located above the driver's seat 15. One of the front pillars 162 is disposed diagonally in front to the left of the driver's seat 15, and the other front pillar 162 is disposed diagonally in front to the right of the driver's seat 15. One of the rear pillars 163 is disposed diagonally behind to the left of the driver's seat 15, and the other rear pillar 163 is disposed diagonally behind to the right of the driver's seat 15. The roof 164 is supported by the front pillars 162 and the rear pillars 163.

The cabin 16 includes a windshield 165 located forward of the driver's seat 15. The windshield 165 is disposed between the left and right front pillars 162. The cabin 16 includes doors 166 that are openable and closable. The doors 166 are respectively disposed on the opposite sides in the vehicle-width direction. Each of the doors 166 is disposed between a corresponding one of the front pillars 162 and a corresponding one of the rear pillars 163.

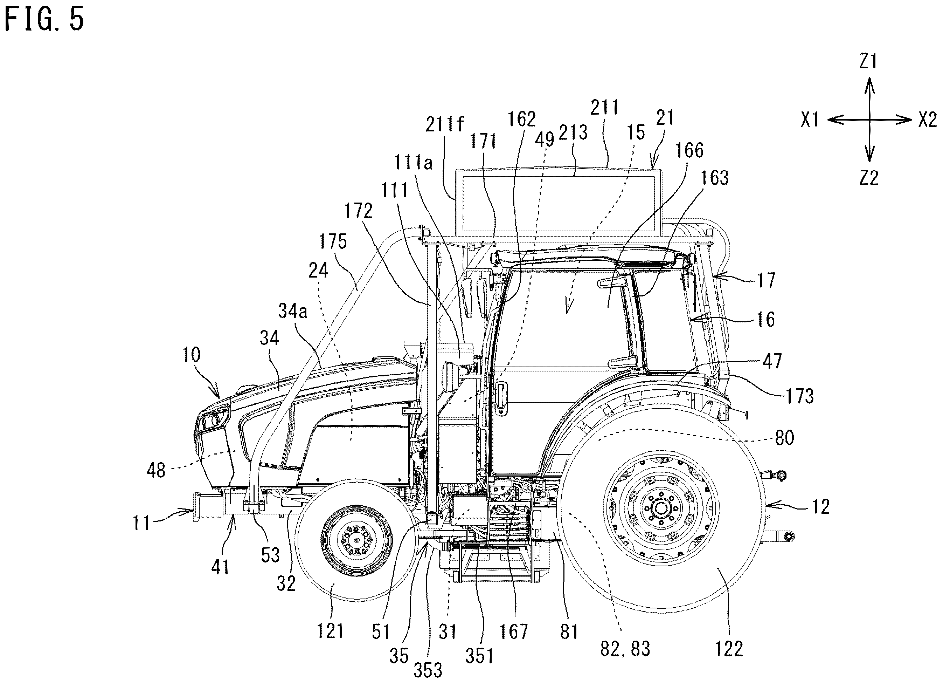

The cabin 16 has a step 167 on its one side (left side) in the width direction of the vehicle body (see FIG. 5). The step 167 is a member on which the operator puts his/her foot when entering and leaving the cabin 16.

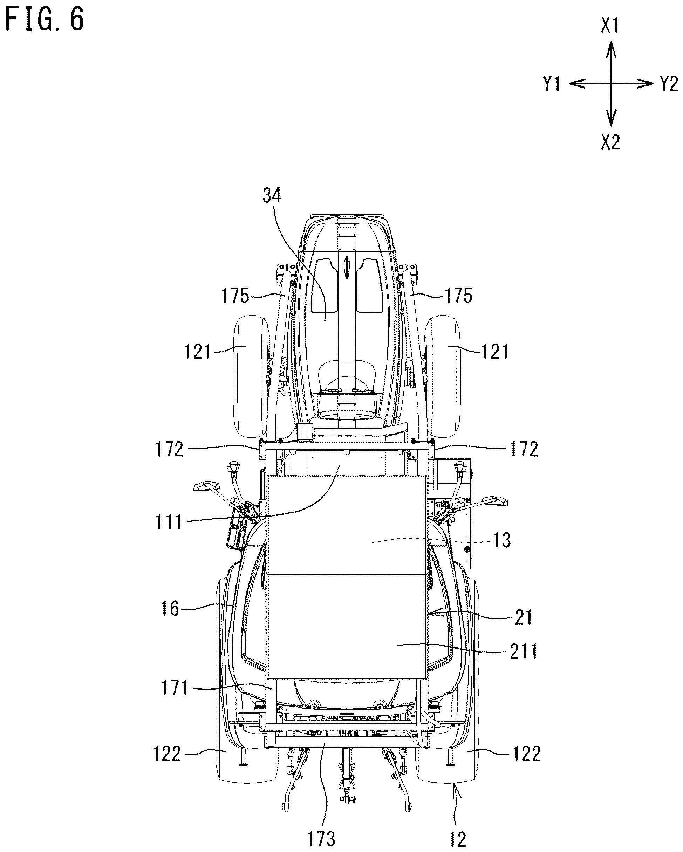

The cover 111 and the hood 34 are disposed forward of the cabin 16. As illustrated in FIGs. 2 and 6, each of the cover 111 and the hood 34 is smaller in dimension in the vehicle-width direction than the cabin 16. The hood 34 is smaller in dimension in the vehicle-width direction than the cover 111.

The work vehicle 10 of the present embodiment includes the cabin 16, but does not necessarily include the cabin 16. The work vehicle 10 may include, in place of the cabin 16, a canopy or a rollover protective structure (ROPS). If the work vehicle 10 does not include the cabin 16, the tank unit 21 is supported by the installation frame 17 and is located above the driver's seat 15.

### [Traveling device 12]

The traveling device 12 includes the front wheels 121 and the rear wheels 122 (see FIG. 6). The front wheels 121 are respectively disposed leftward and rightward of a front portion of the vehicle body 11. The rear wheels 122 are respectively disposed leftward and rightward of a rear portion of the vehicle body 11. The maximum dimension between the left and right rear wheels 122 in the vehicle-width direction is larger than the maximum dimension between the left and right front wheels 121 in the vehicle-width direction. The maximum dimension between the left and right rear wheels 122 in the vehicle-width direction corresponds to the maximum width dimension of the work vehicle 10.

The front wheels 121 and/or the rear wheels 122 are rotated by the motive power from the motor 31. The front wheels 121 and/or the rear wheels 122 to be rotated by the motive power from the motor 31, i.e., the driving wheels may be crawlers (caterpillars).

### [Drive device 14]

As described above, the drive device 14 includes the fuel cell 24, the battery unit 30, and the motor 31.

The fuel cell 24 is disposed on the chassis 41 and located near the front of the vehicle body 11 (see FIG. 9). The motor 31 is located rearward of the fuel cell 24 (see FIG. 8). The battery unit 30 is located outward of the vehicle body 11 in the vehicle-width direction (see FIG. 1). The battery unit 30 is attached to the chassis 41 with the support structure 37.

The fuel cell 24 generates electric power from hydrogen gas as fuel. That is, the fuel cell 24 generates electric power from hydrogen gas in order to rotate the motor 31. The fuel cell 24 (see FIG. 9) includes a cell casing 241 having an approximately rectangular box shape, and a fuel cell stack 242 disposed in the cell casing 241. The fuel cell stack 242 includes a plurality of battery cells. The plurality of battery cells each include a cathode and an anode. A plurality of single cells are in a stacked state. Electric power is generated by each of the plurality of battery cells and is collectively output to the battery unit 30.

The motor 31 includes a rotor configured to rotate and a stator including a plurality of coils. The motor 31 includes an output shaft coupled to the power transmission mechanism 333 in the gear case 33 (see FIG. 8). The motor 31 is located rearward of the fuel cell 24 and below the second radiator 49 (see FIG. 9).

### [Tank unit 21]

The tank unit 21 includes the tank 13 and the tank case 211 accommodating the tank 13. The tank 13 is a high-pressure container having an approximately cylindrical shape. The tank 13 is made of, for example, a fiber-reinforced resin reinforced with carbon fibers or glass fibers. In the present embodiment, three tanks 13 each having a cylindrical shape are fixed to the tank case 211 with their axial directions oriented in parallel with the vehicle-width direction. The number of tanks 13 is not limited to three.

The tank case 211 is a box body capable of accommodating the tank(s) 13. The tank case 211 has a box shape covering the entire tank(s) 13 accommodated therein. The tank case 211 includes an openable/closable door 213 (see FIG. 1) disposed on one side or each side of the tank case 211 in the vehicle-width direction, so that the tank case 211 is openable in the vehicle-width direction. The tank case 211 is disposed above the roof 164, i.e., spaced apart from the roof 164 in the up-down direction. The tank case 211 is fixed to an upper frame portion 171 of the installation frame 17. The tank case 211 is made of a metal such as aluminum or steel to protect the tank 13 from external thermal and physical influences.

The tank 13 is disposed above the cabin 16 (the driver's seat 15). Therefore, the fuel cell 24, the filling unit 25, the motor 31, and the battery unit 30 are arranged in the vehicle body 11 with a great degree of freedom. In a case where a conventional internal combustion engine-equipped work vehicle is converted into the work vehicle 10 including the fuel cell 24 and the motor 31, which is described in the present embodiment, there is no necessity to largely change the arrangement of the respective components.

The tank 13 is coupled to the rear pipe 22r and the front pipe 22f via a valve unit 212 (see FIG. 9). The rear pipe 22r (see FIG. 3) is a gas inlet channel connecting the filling port 26 for hydrogen gas and the valve unit 212 to guide the hydrogen gas from the filling port 26 toward the tank 13. The front pipe 22f (see FIG. 2) is a gas outlet channel connecting the fuel cell 24 and the valve unit 212 to guide the hydrogen gas in the tank 13 toward the fuel cell 24. The hydrogen gas that is introduced from the outside of the vehicle through the filling port 26 is stored in the tank 13 and is supplied to the fuel cell 24. The valve unit 212 includes, for example, an open-close valve and a reducing valve. The valve unit 212 adjusts a flow rate of the hydrogen gas stored in the tank 13 to a predetermined value. The hydrogen gas the flow rate of which has been adjusted is guided to the fuel cell 24 through the front pipe 22f.

### [Installation frame 17]

The installation frame 17 (see FIG. 1) is a frame structure with which the tank 13 is installed on the vehicle body 11. The installation frame 17 is made of steel. The installation frame 17 of the present embodiment includes the upper frame portion 171 supporting the tank 13 as well as first front frame portions 172, second front frame portions 175, and a rear frame portion 173 forming a frame for supporting the upper frame portion 171. The tank case 211 is attached to the upper frame portion 171. In other words, the upper frame portion 171 supports the tank 13 via the tank case 211. The specific configuration of the installation frame 17 is described below.

The filling unit 25 is disposed on the rear frame portion 173 (see FIG. 3). The filling unit 25 has the filling port 26 to which the gas filling nozzle of the hydrogen gas supply machine (not illustrated), which is placed separately from the vehicle, is connected in filling the tank 13 with hydrogen gas.

### [Radiator]

The work vehicle 10 (see FIGs. 4 and 5) includes a cooling system for cooling the fuel cell 24, the motor 31, a step-up circuit 80, an inverter 81, DC/DC converters 82 and 83, and the like with a coolant. The work vehicle 10 includes the first radiator 48 and the second radiator 49 each constituting a part of the cooling system. As illustrated in FIG. 9, the first radiator 48 is located forward of the fuel cell 24, and the second radiator 49 is located rearward of the fuel cell 24.

The first radiator 48 is a radiator configured to cool the components other than the fuel cell 24. The second radiator 49 is a radiator configured to cool the fuel cell 24.

The first radiator 48 is connected to electrical components (heat generating components) to be cooled, for the motor 31, the step-up circuit 80 (see FIG. 5), the inverter 81, and the DC/DC converters 82 and 83, via a first cooling flow channel (not illustrated) provided with a circulation pump. The first radiator 48 cools the coolant supplied thereto via the first cooling flow channel, by heat exchange with outside air.

The second radiator 49 is connected to the fuel cell 24 via a second cooling flow channel (not illustrated) provided with a circulation pump. The second radiator 49 cools the coolant supplied thereto via the second cooling flow channel, by heat exchange with outside air.

The first radiator 48 includes a first fan 481 (see FIG. 9). The second radiator 49 includes a second fan 491. The first fan 481 encourages the heat exchange with the coolant by its rotation that allows air to pass through the first radiator 48. The second fan 491 encourages the heat exchange with the coolant by its rotation that allows air to pass through the second radiator 49.

### [Battery unit 30]

The battery unit 30 stores electric power that is generated by the fuel cell 24 and is supplied to the motor 31. The battery unit 30 includes the battery 300 (a battery pack) and a housing 307 accommodating the battery 300. The battery 300 temporarily stores the electric power generated by the fuel cell 24, and outputs the electric power to an electric device such as the motor 31. The battery 300 includes a plurality of battery cells. The battery 300 is a rechargeable secondary battery such as a lithium-ion battery or a lead-acid battery.

### [Electrical system]

The work vehicle 10 includes a junction box 75. The junction box 75 is an electrical connection box for relay connection and distribution of the electric power output from the battery unit 30.

The fuel cell 24 is connected to the inverter 81 (see FIG. 5) via the step-up circuit. The battery unit 30 is connected to the inverter 81 via the junction box 75. The inverter 81 is electrically connected to the motor 31. The inverter 81 converts DC electric power output from the step-up circuit into three-phase AC electric power, and outputs the three-phase AC electric power to the motor 31.

The work vehicle 10 includes a low-voltage electrical component operable at a voltage lower than a voltage at which the motor 31 operates. The low-voltage electrical component receives electric power stepped down by a step-down circuit, via the junction box 75. The work vehicle 10 of the present embodiment includes, as the low-voltage electrical component (see FIG. 9), the battery unit 30, the radiators 48 and 49, and an air conditioner 74. The work vehicle 10 includes, as the step-down circuit, the first DC/DC converter 82 and the second DC/DC converter 83 (see FIG. 5).

The work vehicle 10 includes a positioning device 65 (see FIG. 2). The positioning device 65 receives satellite signals transmitted from a plurality of GNSS satellites, and performs positioning based on the satellite signals. The term "GNSS" is a general term of satellite positioning systems such as the Global Positioning System (GPS), the Quasi-Zenith Satellite System (QZSS) (e.g., "Michibiki"), GLONASS (Russia), Galileo (Europe), and BeiDou (China).

The positioning device 65 includes a receiver 65a configured to receive a satellite signal, and a computing processor 65b. The receiver 65a includes an antenna for receiving a signal from a GNSS satellite. The computing processor 65b obtains by calculation a position (coordinates) of the work vehicle 10, based on the signal received by the receiver 65a. The positioning device 65 thus acquires position information indicating the position of the work vehicle 10.

### [Specific configuration of installation frame 17]

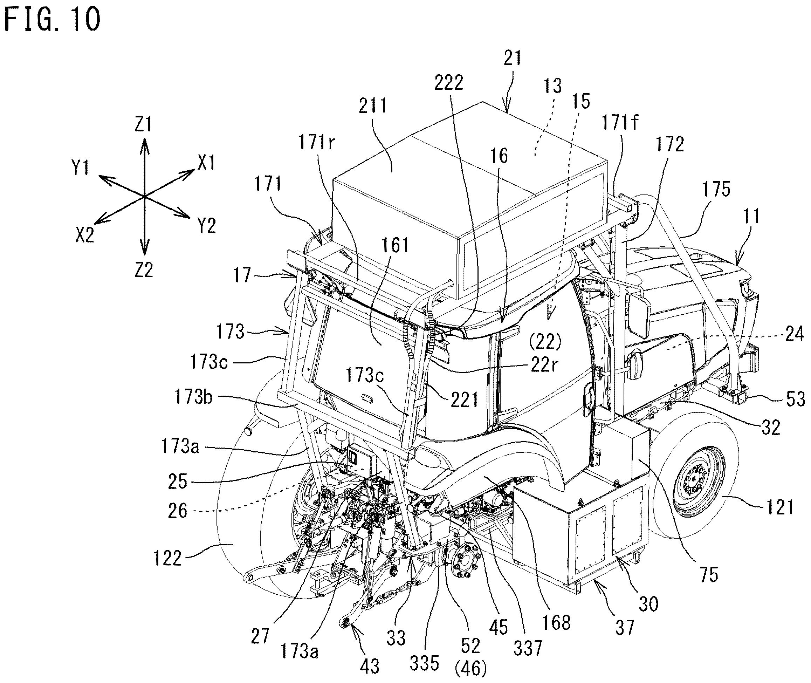

The installation frame 17 (see FIGs. 1 and 8) is a member with which the tank 13 configured to store hydrogen gas is installed on the vehicle body 11. The installation frame 17 is fixed to the vehicle body 11. Therefore, the vehicle body 11 includes, as a support portion, a first front support portion 51, a second front support portion 53, and a rear support portion 52 (see FIG. 10). FIG. 10 is a perspective view of the vehicle body 11 from which the right rear wheel 122 is removed.

The first front support portion 51 (see FIGs. 1 and 8) is located on a front side of the vehicle body 11 and the opposite sides in the vehicle-width direction. The second front support portion 53 is located forward of the front support portion 51 and on the opposite sides in the vehicle-width direction. The first front support portion 51 and the second front support portion 53 are each a beam-shaped member protruding from the front frame 32 in the vehicle-width direction.

As described above (see FIG. 8), the vehicle body 11 includes the front frame 32 and the gear case 33. The gear case 33 includes the main case 337 located at the center in the vehicle-width direction, and the axle case 335 for the rear wheels 122. The axle case 335 is fixed to the main case 337.

The rear support portion 52 (see FIG. 10) is located rearward of the vehicle body 11 and on the opposite sides in the vehicle-width direction. In the present embodiment, the rear support portion 52 is a coupling bracket 46 fixed on the axle case 335.

The installation frame 17 (see FIGs. 1 and 8) includes the upper frame portion 171, the pair of left and right first front frame portions 172, the pair of left and right second front frame portions 175, and the set of rear frame portion 173.

The upper frame portion 171 is a rectangular frame constituted of four linear members, i.e., front, rear, left, and right linear members. The upper frame portion 171 supports the tank 13. In the present embodiment, the tank case 211 is attached to the upper frame portion 171, and the tank 13 is accommodated in the tank case 211.

The first front frame portions 172 are each a pillar member and respectively extend upward from opposite ends of the front support portion 51 in the vehicle-width direction. The pair of first front frame portions 172 are coupled to opposite ends of a front portion 171f of the upper frame portion 171 in the vehicle-width direction. The pair of first front frame portions 172 support the front portion 171f of the upper frame portion 171 from below at the opposite ends of the front portion 171f in the vehicle-width direction. The first front frame portions 172 each have a linear shape extending from the front support portion 51 toward the upper frame portion 171.

The rear frame portion 173 includes a plurality of linear members. The rear frame portion 173 extends upward from opposite ends of the rear support portion 52 in the vehicle-width direction (the coupling bracket 46 illustrated in FIG. 10). The rear frame portion 173 is coupled to opposite ends of a rear portion 171r of the upper frame portion 171 in the vehicle-width direction. The rear frame portion 173 supports the rear portion 171r of the upper frame portion 171 from below at the opposite ends of the rear portion 171r in the vehicle-width direction.

The upper frame portion 171 supporting the tank 13 is supported on the chassis 41 with the first front frame portions 172 and the rear frame portion 173 at opposite ends of the upper frame portion 171 in the vehicle-width direction. The tank 13 imposes a load on the chassis 41 via the installation frame 17.

The weight of the tank 13 is partially held by the first front frame portions 172. The first front frame portions 172 are each a long linear member that is not bent, and are therefore less susceptible to buckling even when receiving a compressive force.

The second front frame portions 175 (see FIGs. 1 and 8) are each a pillar member and respectively extend upward and rearward from opposite ends of the second front support portion 53 in the vehicle-width direction. The pair of second front frame portions 175 are coupled to the opposite ends of the front portion 171f of the upper frame portion 171 in the vehicle-width direction. The second front frame portions 175 may be coupled to upper portions of the first front frame portions 172 rather than the upper frame portion 171. When the work vehicle 10 accelerates or decelerates, the inertial force of the tank 13 acts on the installation frame 17. This configuration allows the second front frame portions 175 to resist this inertial force.

The first front frame portions 172 and the second front frame portions 175 are fixed to the front frame 32, which constitutes a part of the chassis 41, with the first front support portion 51 and the second front support portion 53, respectively.

The rear support portion 52 is fixed to the axle case 335 of the gear case 33, which constitutes the rest of the chassis 41, with the rear support portion 52 (the coupling bracket 46).

The chassis 41 forms a framework for installing the hood 34, the drive device 14, and the like, has a firm structure, and exhibits high rigidity. The tank 13 is supported on the chassis 41 with the installation frame 17 as described above, so that the work vehicle 10 is capable of traveling stably.

The installation frame 17 includes a pair of inclined frame portions 174. Each of the inclined frame portions 174 extends rearward and upward from a portion 172p of a corresponding one of the first front frame portions 172, and is coupled to a portion 171b of the upper frame portion 171. The inclined frame portions 174 are each a linear member. The use of the inclined frame portions 174 improves the rigidity of the installation frame 17 in the vehicle front-rear direction.

The rear frame portion 173 (see FIG. 10) includes a pair of first frame members 173a, a beam member 173b, and a pair of second frame members 173c. The pair of first frame members 173a respectively extend upward from the opposite ends of the rear support portion 52 (the coupling bracket 46) in the vehicle-width direction. The beam member 173b connects to the pair of first frame members 173a in the vehicle-width direction. The pair of second frame members 173c extend upward from positions on opposite ends of the beam member 173b in the vehicle-width direction, and are coupled to the rear portion 171r of the upper frame portion 171. The rear frame portion 173 is reinforced with the beam member 173b.

A clearance between the pair of first frame members 173a is different from a clearance between the pair of second frame members 173c. The pair of first frame members 173a are located between the rear wheels 122 on the opposite sides in the vehicle-width direction, and the clearance between the pair of first frame members 173a is narrow. On the other hand, the pair of second frame members 173c are located rearward of the driver's seat 15, and the clearance between the pair of second frame members 173c is wide for the purpose of securing the field of view of the operator.

The cabin 16 has a rear window 161 that is openable rearward with its upper portion as a fulcrum. The clearance between the pair of second frame members 173c is wide in the vehicle-width direction, and the pair of second frame members 173c are respectively located leftward and rightward of the opened rear window 161 in the vehicle-width direction. The rear frame portion 173 does not hinder the opening and closing operation of the rear window 161.

The first frame members 173a extend upward and rearward from the rear support portion 52. On the other hand, the second frame members 173c extend upward and forward from the beam member 173b. Accordingly, the rear frame portion 173 has a shape fitting the shape of the rear portion of the work vehicle 10.

The driver's seat 15 is installed on a mount 168 of the cabin 16. As described above, the gear case 33, which constitutes the rear portion of the chassis 41, includes the axle case 335 for the rear wheels 122. The coupling bracket 46 is fixed on the axle case 335. The coupling bracket 46 includes an elastic bushing 45. The mount 168, on which the driver's seat 15 is mounted, is attached to the coupling bracket 46 via the elastic bushing 45. In other words, the driver's seat 15 is installed on the chassis 41 (the axle case 335) with the coupling bracket 46 including the elastic bushing 45.

On the other hand, the rear frame portion 173 of the installation frame 17 is directly fixed to the chassis 41 (the axle case 335) with the coupling bracket 46 (the rear support portion 52).

The first front frame portions 172 and second front frame portions 175 of the installation frame 17 are also directly fixed to the chassis 41 (the front frame 32) with the first front support portion 51 and second front support portion 53.

As described above, the driver's seat 15 is installed on the chassis 41 via the elastic bushing 45 whereas the installation frame 17 is coupled to the chassis 41 in a rigid manner. The chassis 41 and the installation frame 17 are integrated into a single rigid body.

In a case where the work vehicle 10 travels on a rough road, the installation frame 17 supporting the tank 13 does not wander by behaving the same as the chassis 41. On the other hand, the driver's seat 15 offers a comfortable ride due to the elastic bushing 45 interposed between the driver's seat 15 and the chassis 41.

The coupling bracket 46 is used for coupling the rear frame portion 173 constituting a part of the installation frame 17. The driver's seat 15 is attached to the coupling bracket 46 via the elastic bushing 45. In other words, the driver's seat 15 and the rear frame portion 173 are supported on the vehicle body 11 (the chassis 41) with the coupling bracket 46. The coupling bracket 46 serves as an attachment member for the driver's seat 15 and an attachment member for a part (the rear frame portion 173) of the installation frame 17.

### [Placement of installation frame 17]

The upper frame portion 171 is located above the driver's seat 15 installed on the vehicle body 11 (see FIGs. 4, 5, and 9). The work vehicle 10 includes the cabin 16, and the upper frame portion 171 is located above the cabin 16.

The first front frame portions 172 are located forward of the driver's seat 15 (the cabin 16). The tank 13 is located within a range above the driver's seat 15 (the cabin 16) and rearward of the first front frame portions 172 located forward of the driver's seat 15 (the cabin 16).

The rear frame portion 173 is located rearward of the driver's seat 15 (the cabin 16). The tank 13 is located within a range above the driver's seat 15 (the cabin 16) and forward of the rear frame portion 173 located rearward of the driver's seat 15 (the cabin 16).

A clearance between the first front frame portions 172 and the rear frame portion 173 is wide, which provides a degree of freedom in a space for placement of the tank 13.

The tank 13 is accommodated in the tank case 211. The upper frame portion 171 is located above the cabin 16. The tank case 211 has a front end 211f located forward of the cabin 16. According to this arrangement, it is possible to bring the position of the tank 13 in the vehicle front-rear direction close to the center of gravity of the vehicle.

The first front support portion 51 is located between the front wheels 121 and the rear wheels 122. The first front frame portions 172 are also located between the front wheels 121 and the rear wheels 122.

The driver's seat 15 is installed on the vehicle body 11 at the position rearward of the front wheels 121. The first front support portion 51 is located between the front wheels 121 and the driver's seat 15. The first front frame portions 172 are also located between the front wheels 121 and the driver's seat 15.

A space between the front wheels 121 and the rear wheels 122, particularly a space between the front wheels 121 and the driver's seat 15 is effectively used for the placement of the first front frame portions 172.

The first front frame portions 172 (see FIGs. 2 and 6) are located within a range in the vehicle-width direction between the front wheels 121 on the opposite sides in the vehicle-width direction. The first front frame portions 172 do not protrude outward in the vehicle-width direction beyond the front wheels 121.

As described above (see FIG. 3), the rear frame portion 173 is located within a range in the vehicle-width direction between the rear wheels 122 on the opposite sides in the vehicle-width direction. Specifically, the first frame members 173a of the rear frame portion 173 are located between the rear wheels 122 on the opposite sides in the vehicle-width direction.

The rear frame portion 173 (see FIG. 4) is located within the range between the rear wheels 122 in the vehicle front-rear direction.

As a result, the rear frame portion 173 does not protrude outward beyond the rear wheels 122 in the vehicle-width direction, and does not protrude rearward beyond the rear wheels 122.

The cabin 16 (see FIGs. 4 and 5) includes the pair of front pillars 162 located on the opposite sides in the vehicle-width direction, and the pair of rear pillars 163 located on the opposite sides in the vehicle-width direction. The first front frame portions 172 are provided separately from the front pillars 162. The rear frame portion 173 is provided separately from the rear pillars 163. Therefore, the cabin 16 does not need to hold the weight of the tank 13, which eliminates a necessity to make the front pillars 162 and rear pillars 163 of the cabin 16 highly rigid.

The first front frame portions 172 are located forward of the front pillars 162. The rear frame portion 173 is located rearward of the rear pillars 163. A clearance between the first front frame portions 172 and the rear frame portion 173 in the vehicle front-rear direction is wide, and the cabin 16 is located in this clearance. The tank unit 21 is located above the cabin 16.

In the present embodiment (see FIG. 1), the front pipe 22f which is one of the hydrogen pipes 22 is disposed along one of the first front frame portions 172 of the installation frame 17. The front pipe 22f is also disposed along one of the inclined frame portions 174. The rear pipe 22r which is one of the hydrogen pipes 22 is disposed along one of the second frame members 173c of the rear frame portion 173. One of the first front frame portions 172, one of the inclined frame portions 174, and the rear frame portion 173 are used as members for attaching the hydrogen pipes 22.

The hydrogen pipes 22 (the front pipe 22f, the rear pipe 22r) connected to the tank 13 are only required to be disposed along at least one of the corresponding first front frame portion 172 and the rear frame portion 173.

### [Pipes 22 for hydrogen gas]

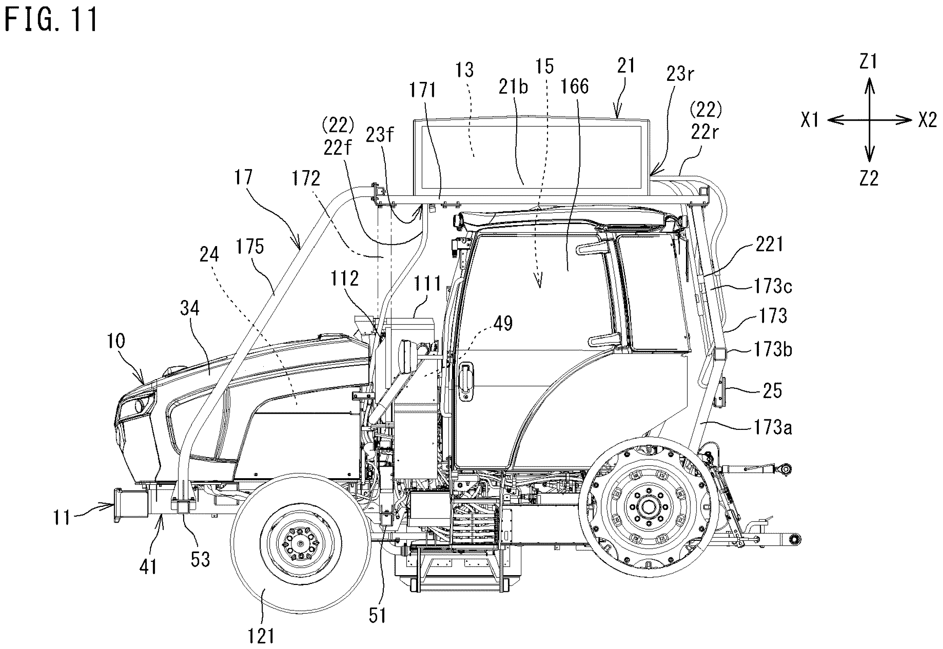

FIG. 11 is a side view of the work vehicle 10 illustrated in FIG. 5, from which one of the rear wheels 122 and one of the first front frame portions 172 are removed. In FIG. 11, the removed first front frame portion 172 is indicated by an imaginary line (a chain double-dashed line).

The tank unit 21 includes the tank 13 configured to store hydrogen gas, and is disposed above the vehicle body 11. The work vehicle 10 includes, as installed components for hydrogen on vehicle body 11, the fuel cell 24 and the filling unit 25 for hydrogen gas. The fuel cell 24 is located forward of the tank 13. In other words, the fuel cell 24 is located near the front of the vehicle body 11. The filling unit 25 is located rearward of the tank 13. In other words, the filling unit 25 is located near the rear of the vehicle body 11.

The work vehicle 10 includes the pipes 22 for hydrogen gas connecting the tank 13 and the installed components for hydrogen (the fuel cell 24, the filling unit 25). The pipes 22 include the rear pipe 22r connecting the filling unit 25 and the tank 13, and the front pipe 22f connecting the tank 13 and the fuel cell 24.

The front pipe 22f is connected to the fuel cell 24 via a pipe region 23f in a lower portion and a front portion of the tank unit 21. In the present embodiment, the front pipe 22f passes the pipe region 23f located in a lower surface of the tank unit 21.

The rear pipe 22r is connected to the filling unit 25 via a pipe region 23r in the lower portion and a rear portion of the tank unit 21. In the present embodiment, the rear pipe 22r passes the pipe region 23r located in a rear surface of the tank unit 21.

As described above, the tank unit 21 has, in its lower portion 21b, the pipe regions 23f and 23r where the pipes 22 (the front pipe 22f and the rear pipe 22r) connected to the tank 13 pass. The lower portion 21b of the tank unit 21 corresponds to a portion of the tank unit 21 (the tank case 211) located below a middle position of the tank unit 21 (the tank case 211) in the up-down direction, and includes a bottom surface portion (a lower surface portion) of the tank unit 21 (the tank case 211).

Therefore, the lengths of the pipes 22 are reduced as much as possible by bringing the pipe regions 23f and 23r in the tank unit 21 close to the installed components for hydrogen (the fuel cell 24, the filling unit 25) on the vehicle body 11 as much as possible. In other words, the length of the front pipe 22f connecting the tank 13 and the fuel cell 24 is reduced as much as possible, and the length of the rear pipe 22r connecting the filling unit 25 and the tank 13 is reduced as much as possible.

As illustrated in FIG. 1, the pipe region 23r for the rear pipe 22r is located on the right side (a first side in the vehicle-width direction). The pipe region 23f for the front pipe 22f is located on the left side (a second side in the vehicle-width direction). The rear pipe 22r is connected to the tank 13 via the pipe region 23r in the rear portion on the right side. The front pipe 22f is connected to the fuel cell 24 via the pipe region 23f in the front portion on the left side. In the tank unit 21, the rear pipe 22r and the front pipe 22f are laid out efficiently.

Both the front and rear pipe regions 23f and 23r may be located on the right side or may be located on the left side.

The vehicle body 11 (see FIG. 11) includes the cover 111 covering the second radiator 49 which is an installed component located near the front of the vehicle body 11. The cover 111 has an opening 112 through which the front pipe 22f passes. In the present embodiment, the opening 112 is a cutout formed in a part of the cover 111 made of a metal. Using the opening 112, it is possible to lay out the front pipe 22f efficiently as much as possible without a necessity for the front pipe 22f, which is connected to the fuel cell 24, to bypass the cover 111.

As described above, the work vehicle 10 includes the installation frame 17 with which the tank unit 21 is installed on the vehicle body 11. In the present embodiment (see FIG. 10), the rear pipe 22r is attached along a part (one of the second frame members 173c) of the rear frame portion 173 of the installation frame 17. The rear frame portion 173 includes a clamp member 221 with which the rear pipe 22r is fixed to one of the second frame members 173c. The clamp member 221 may be a conventionally known component as long as it is configured to attach a pipe to a part of the rear frame portion 173 serving as a fixing member.

The front pipe 22f (see FIG. 11) is attached along a part of one of the first front frame portions 172 of the installation frame 17. The first front frame portion 172 includes a clamp member with which the front pipe 22f is fixed to a part of the first front frame portion 172. The clamp member is equal in type to the clamp member 221 for the rear pipe 22r.

As described above, each of the pipes 22 (the front pipe 22f, the rear pipe 22r) is attached along a part of the corresponding pillar-shaped frame member (the first front frame portions 172, the rear frame portion 173) of the installation frame 17. The installation frame 17 is used for supporting the pipes 22 in the region from the tank unit 21 to each of the installed components for hydrogen, i.e., the fuel cell 24 and the filling unit 25. The pipes 22 are fixed to the corresponding portions of the installation frame 17 by the clamp members 221 without positional deviation.

The installation frame 17 is constituted of hollow tubular members. The pipes 22 may at least partially pass through the tubular members. For example, the rear pipe 22r (see FIG. 1) is disposed outward of the rear frame portion 173 along the rear frame portion 173. As a modification example, a part of the rear pipe 22r may pass through a part of the rear frame portion 173 corresponding to one of the hollow tubular members. In this case, the frame members (the tubular members) function as covers for protecting the pipes 22.

Likewise, a part of the front pipe 22f may pass through one of the inclined frame portions 174 corresponding to the hollow tubular members or one of the first front frame portions 172 corresponding to the hollow tubular members.

The rear pipe 22r includes a flexible pipe 222 (see FIG. 10) as a part of the rear pipe 22r. The flexible pipe 222 may be a conventionally known component as long as it is configured to allow passage of hydrogen gas and exhibit flexibility. Likewise, the front pipe 22f includes a flexible pipe as a part of the front pipe 22f. The flexible pipe is equal in type to the flexible pipe 222 for the rear pipe 22r.

As described above, the pipes 22 (the rear pipe 22r, the front pipe 22f) each including the flexible pipe 222 are easily attached to the work vehicle 10. After each of the pipes 22 is attached, even if an external force is applied to the pipe 22 due to, for example, vibrations, the corresponding flexible pipe 222 is capable of absorbing the external force.

### [Filling unit 25]

As described above (see FIG. 10), the filling unit 25 has the filling port 26 to which the gas filling nozzle of the hydrogen gas supply machine (not illustrated), which is placed separately from the vehicle, is connected in filling the tank 13 with hydrogen gas. The rear pipe 22r connects the filling unit 25 (the filling port 26) and the tank 13. The work vehicle 10 includes the installation frame 17 with which the tank 13 is placed on the cabin 16. The rear frame portion 173 of the installation frame 17 includes a bracket 27 serving as an attachment portion to which the filling unit 25 (the filling port 26) is attached.

The rear frame portion 173 serves as both a member for fixing the rear pipe 22r and a member for attaching the filling unit 25. The rear frame portion 173 corresponds to a part of the installation frame 17 with which the tank 13 is installed on the vehicle body 11. The installation frame 17, with which the tank unit 21 is installed on the vehicle body 11, serves as a member for attaching the filling unit 25 to the vehicle body 11.

The tank 13 is placed above the vehicle body 11 whereas the bracket 27, to which the filling unit 25 is attached, is disposed on the frame (the rear frame portion 173) coupled to the vehicle body 11, at a relatively low position. Hydrogen gas filled by the filling unit 25 is supplied to the tank 13 through the rear pipe 22r.

In the present embodiment, the rear frame portion 173 includes the bracket 27. Alternatively, another one of the frame members constituting the installation frame 17 may include the bracket 27 although not illustrated. Still alternatively, another frame of the vehicle body 11, which is different from the installation frame 17, may include the bracket 27 although not illustrated. In other words, the frame coupled to the vehicle body 11 is only required to include the attachment portion (the bracket 27) to which the filling unit 25 (the filling port 26) is attached. This frame includes frame members extending upward from the vehicle body 11 (the chassis 41). In the present embodiment, the frame members correspond to the first frame member 173a located on the first side of the vehicle body 11 in the vehicle-width direction, and the first frame member 173a located on the second side of the vehicle body 11 in the vehicle-width direction.

Using the frame including the bracket 27 enables the work vehicle 10 to have a degree of freedom in position where the filling port 26 is placed and to facilitate hydrogen gas filling work.

The rear frame portion 173 including the bracket 27 is located near the rear of the vehicle body 11. According to this configuration, the filling unit 25 (the filling port 26) is located on the rear portion of the work vehicle 10. On the other hand, the fuel cell 24 is located on the front side of the vehicle body 11. The filling unit 25 (the filling port 26) is spaced apart from the fuel cell 24, so that safety is promoted.

The work vehicle 10 includes the driver's seat 15 installed on the vehicle body 11 and the cabin 16 within which the driver's seat 15 is located. The fuel cell 24 is located forward of the cabin 16. The rear frame portion 173 including the bracket 27 is located rearward of the cabin 16. According to this arrangement, the cabin 16 is interposed between the filling unit 25 (the filling port 26) and the fuel cell 24, so that the filling unit 25 (the filling port 26) is spaced apart from the fuel cell 24.

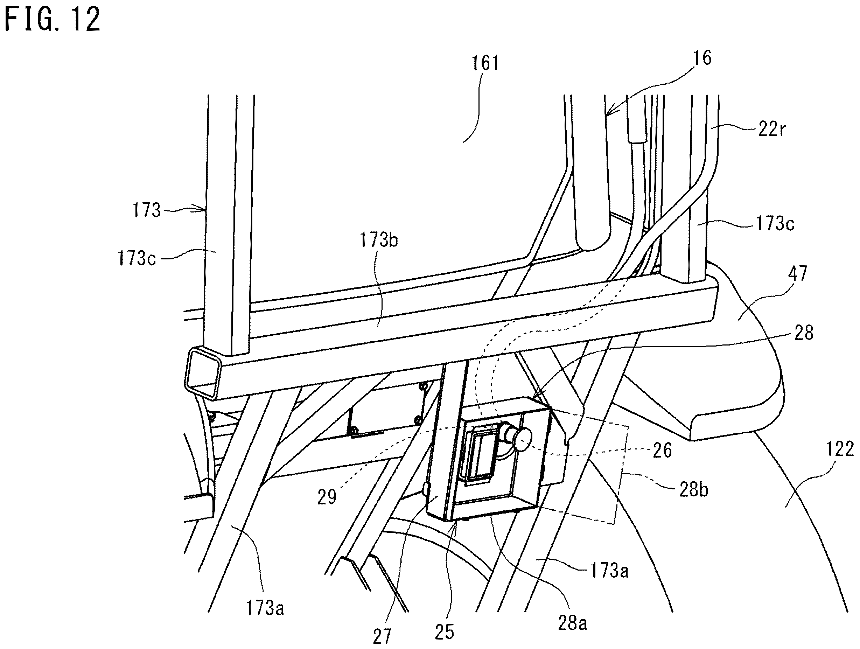

FIG. 12 is an explanatory view of the filling unit 25 attached to the bracket 27 and its surroundings. The filling unit 25 includes a housing 28 accommodating the filling port 26. The housing 28 includes a case 28a and a lid 28b. The case 28a has upper, lower, left, right, and front walls, and is open rearward. The lid 28b is openable and closable, and the opening of the case 28a can be closed with the lid 28b. In the housing 28, the filling port 26 is open rearward or sideward. The rear pipe 22r is coupled to the filling unit 25 (the filling port 26) from the front of the housing 28.

According to this configuration, the filling port 26 is protected by the housing 28. The rear pipe 22r is coupled to the filling unit 25 through a space defined by the housing 28 and the rear portion of the vehicle body 11. A connection portion 29 between the rear pipe 22r and the housing 28 is protected without being exposed to a wide space in the rear of the vehicle.

In the present embodiment, the filling unit 25 (the filling port 26) is located rearward of the cabin 16 and between the rear wheels 122 on the opposite sides in the vehicle-width direction. The left and right sides of the filling unit 25 (the filling port 26) are protected by the rear wheels 122. The front side of the filling unit 25 (the filling port 26) is protected by the cabin 16.

The rear frame portion 173 includes the pair of first frame members 173a located on the opposite ends of the rear frame portion 173 in the vehicle-width direction, and the beam member 173b serving as a third frame member and connecting the pair of first frame members 173a in the vehicle-width direction. The filling unit 25 (the filling port 26) is located below the beam member 173b. The upper side of the filling unit 25 (the filling port 26) is protected by the beam member 173b.

Although not illustrated, the attachment portion (the bracket 27) for the filling unit 25 (the filling port 26) may be disposed across both the first frame member 173a located on the first side of the vehicle body in the vehicle-width direction and the first frame member 173a located on the second side of the vehicle body in the vehicle-width direction.

The work vehicle 10 of the present embodiment is a tractor and includes the coupling device 43 disposed on the rear of the vehicle body 11 (see FIG. 10). The coupling device 43 is a device for coupling an implement such as a cultivator corresponding to a separate instrument. The bracket 27 is not located at the center in the vehicle-width direction, but is located nearer to one side in the vehicle-width direction, i.e., the right side. Therefore, the filling port 26 is also located nearer to the right side. Alternatively, the bracket 27 (the filling port 26) may be located nearer to the left side.

According to this configuration, in performing the hydrogen gas filling work, the presence of the implement or the coupling device 43 causes the operator's hands to easily reach the filling port 26 even when the operator is hard to access the rear of the work vehicle 10.

The filling unit 25 (the filling port 26) is located above the coupling device 43 when the vehicle body 11 is seen from the rear. The coupling device 43 may be partially changed in orientation or position during operation. Also in this case, the filling unit 25 (the filling port 26) is less likely to be hidden by the coupling device 43. This configuration facilitates the hydrogen gas filling work through the filling port 26.

As described above, the vehicle body 11 includes the coupling bracket 46 to which the mount 168 of the cabin 16 is attached. The first frame members 173a of the rear frame portion 173 are coupled to the coupling bracket 46. The first frame members 173a include the bracket 27 to which the filling unit 25 (the filling port 26) is attached. In other words, the coupling bracket 46 for attaching the cabin 16 serves as a member for attaching the filling unit 25 (the filling port 26) to the vehicle body 11 with the rear frame portion 173.

### [Discharge path 35]

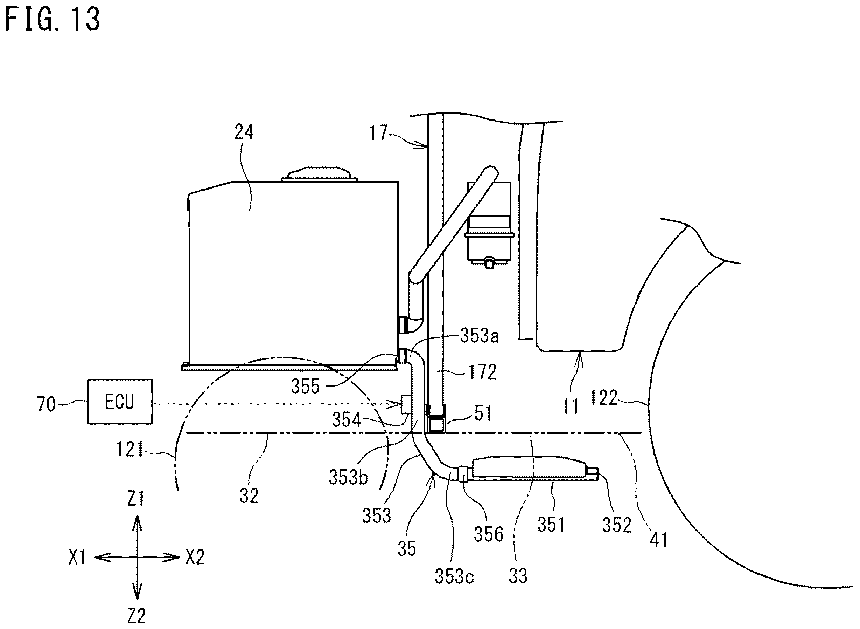

FIG. 13 is an explanatory view of the fuel cell 24 and the discharge path 35. The discharge path 35 serves as a path which is connected to the fuel cell 24 and through which water or water vapor generated due to the operation of the fuel cell 24 is discharged externally. The discharge path 35 includes a discharge pipe 351 and a connection pipe 353. The connection pipe 353 is a pipe connecting the fuel cell 24 and the discharge pipe 351. The discharge pipe 351 has a discharge port 352, and the water or water vapor is discharged externally through the discharge port 352.

The discharge port 352 is open rearward. This configuration prevents headwind from obstructing the discharge of the water or water vapor from discharge pipe 351 while the work vehicle 10 is traveling.

Next, a description will be given of a layout of the discharge path 35 including the discharge pipe 351 in the front-rear direction and the up-down direction. The discharge pipe 351 is not located on the rear portion of the vehicle body 11 near the rear wheels 122, but is located between the front wheels 121 and the rear wheels 122. Therefore, a space between the front wheels 121 and the rear wheels 122 is used as a space for placement of the discharge pipe 351.

The fuel cell 24 is located nearer to the front wheels 121 than to the rear wheels 122 in the vehicle front-rear direction. The fuel cell 24 is located above the axle of the front wheels 121. The discharge pipe 351 is located between the front wheels 121 and the rear wheels 122. The fuel cell 24 and the discharge pipe 351 are located close to each other in the front-rear direction, which eliminates a necessity to prepare the connection pipe 353 which is long in length. It is thus possible to lay out the discharge path 35, which includes the discharge pipe 351, efficiently as much as possible.

The fuel cell 24, which is a heavy object, is located above the axle of the front wheels 121, which makes the work vehicle 10 stable. The discharge pipe 351 is preferably placed near the fuel cell 24; however, the discharge pipe 351 is located rearward of the fuel cell 24, rather than below the fuel cell 24. This configuration prevents the discharge pipe 351 from interfering with the axle of the front wheels 121.

The discharge pipe 351 is lower in height than the fuel cell 24. Therefore, water generated in the discharge path 35 easily reaches the discharge pipe 351 by its own weight. The discharge pipe 351, which is located below the vehicle body 11, is close to a road surface; therefore, the discharged water falls onto the road surface.

As described above, the work vehicle 10 includes the installation frame 17 with which the tank 13 is installed on the vehicle body 11. The vehicle body 11 includes the chassis 41 and the front support portion 51. The fuel cell 24 is installed on the chassis 41 at a position close to the front of the chassis 41. The front support portion 51 is fixed to a part of the chassis 41, the part being located rearward of the fuel cell 24. The front support portion 51 supports, from below, the first front frame portions 172 constituting a part of the installation frame 17.

The fuel cell 24 is located forward of the first front frame portions 172 and the front support portion 51. The discharge pipe 351 is located rearward of the front support portion 51. In other words, the fuel cell 24 and the discharge pipe 351 are respectively located forward of and rearward of the front support portion 51 with the front support portion 51 interposed between the fuel cell 24 and the discharge pipe 351.

The connection pipe 353 extends from the fuel cell 24, passes below the front support portion 51, and then connects to the discharge pipe 351. According to the configuration described above, the discharge pipe 351 is located below the chassis 41 (the front frame 32) and near the road surface; therefore, the discharged water falls onto the road surface.

The connection pipe 353 includes a first connection port 355 located on the upstream side and connected to the fuel cell 24, and a second connection port 356 located on the downstream side and connected to the discharge pipe 351. The connection pipe 353 includes a first pipe 353a extending rearward from the fuel cell 24, a second pipe 353b extending downward from a rear end of the first pipe 353a, and a third pipe 353c extending rearward from a lower end of the second pipe 353b. The first connection port 355 is located in a front end of the first pipe 353a. The second connection port 356 is located in a rear end of the third pipe 353c.

The third pipe 353c is lower in height than the second pipe 353b upstream of the third pipe 353c. The second pipe 353b is lower in height than the first pipe 353a upstream of the second pipe 353b. The second connection port 356 is lower in height than the first connection port 355. As described above, each pipe from the first connection port 355 to the second connection port 356 is lower in height than the corresponding upstream pipe. Therefore, water generated in the connection pipe 353 flows toward the discharge pipe 351 by its own weight.

Alternatively, each pipe from the first connection port 355 to the second connection port 356 may be equal in height to the corresponding upstream pipe.

As described above (see FIGs. 7 and 13), the vehicle body 11 includes the front frame 32 on which the fuel cell 24 and the motor 31 are installed, and the gear case 33 disposed rearward of the front frame 32 and accommodating a gear for changing a rotation speed of the motor 31. The discharge pipe 351 is located below a front portion of the gear case 33. The discharge pipe 351 is placed in a space below the gear case 33. This configuration eliminates a necessity to planarly widen a layout of components for the purpose of securing a space for placement of the discharge pipe 351.

The discharge pipe 351 is located below the driver's seat 15. The discharge pipe 351 is not necessarily located directly below the driver's seat 15. The discharge pipe 351 may be located nearer to one side in the vehicle-width direction as described in the present embodiment, rather than the center in the vehicle-width direction, as long as the discharge pipe 351 is located below the driver's seat 15. This configuration prevents the driver's seat from getting wet.

As described above, the work vehicle 10 of the present embodiment includes the step 167 (see FIG. 5) with which the operator enters or leaves the driver's seat 15 (the cabin 16). The discharge pipe 351 is located below the step 167. A part of an upper portion of the discharge pipe 351 may be equal in height to a part of a lower portion of the step 167. In other words, the state in which the discharge pipe 351 is located below the step 167 refers to a state in which the lowest portion of the discharge pipe 351 is located below the lowest portion of the step 167. The discharge pipe 351 is not necessarily located directly below the step 167, but may be displaced in the vehicle-width direction as described in the present embodiment as long as the discharge pipe 351 is located below the step 167. According to this configuration, the discharge pipe 351 is located near the road surface, so that the discharged water falls onto the road surface. This configuration therefore prevents the driver's seat 15 and the step 167 from getting wet.

Next, a description will be given of a layout of the discharge path 35 in the vehicle-width direction of the vehicle. A drive shaft 61 used for the work vehicle 10 to travel and the gear case 33 coupled to the drive shaft 61 and used for, for example, transmission are present in a central region in the vehicle-width direction on the lower portion of the vehicle body 11 (see FIG. 7). Therefore, the discharge pipe 351 is located nearer to one side in the vehicle-width direction, i.e., the right side than to the center in the vehicle-width direction. The discharge pipe 351 is laid out so as to bypass the drive shaft 61 and the gear case 33.

As described above, the discharge pipe 351 is located below the front portion of the gear case 33 and nearer to one side in the vehicle-width direction, i.e., the right side than to the center in the vehicle-width direction.

The battery unit 30 is located outward in the vehicle-width direction. The battery unit 30 is located on the right side in the vehicle-width direction. The discharge pipe 351 is located nearer to the central side in the vehicle-width direction than the battery unit 30 is. In other words, the discharge pipe 351 is located between the battery unit 30 and the components (the drive shaft 61 and the gear case 33) in the central region in the vehicle-width direction. The discharge pipe 351 is laid out in a vacant space adjacent to the battery unit 30.

As described above (see FIG. 8), the work vehicle 10 includes the support structure 37 with which the battery unit 30 is supported on the vehicle body 11. The support structure 37 includes an auxiliary member 371 to which the discharge pipe 351 is attached. The support structure 37 for the battery unit 30 also serves as a member to which the discharge pipe 351 is attached. The specific configuration of the support structure 37 is described below.

As described above (see FIG. 2), the work vehicle 10 includes the positioning device 65, and the positioning device 65 acquires position information indicating the position of the work vehicle 10. The work vehicle 10 also includes a control device (not illustrated) configured to control the traveling device 12, the drive device 14, and the like, and the control device includes a storage device such as a memory. The storage device stores map information on a map showing positions of a garage, a road, an agricultural field, and the like.

The discharge path 35 (see FIG. 13) includes a drain valve 354 and a control device 70 configured to control opening and closing operation of the drain valve 354. The control device 70 includes an electronic control unit (ECU). The control device 70 controls the opening and closing operation of the drain valve 354, using the position information and the map information.

For example, the work vehicle 10 (the control device) determines whether the work vehicle 10 is in the garage or outside the garage, e.g., on the agricultural field, based on the position information and the map information. In a case where water or water vapor should not be discharged externally since the work vehicle 10 is in the garage, the control device 70 closes the drain valve 354. In a case where the water or water vapor may be discharged since the work vehicle 10 is on the road or the agricultural field, the control device 70 opens the drain valve 354 to discharge the water or water vapor externally.

The control device 70 is capable of automatically discharging the water or water vapor in the discharge path 35 externally. In addition to the automatic discharge operation by the control device 70, for example, an operation panel in the cabin 16 includes an operation unit such as a button for discharge, and the control device 70 may control the opening and closing operation of the drain valve in such a manner that the driver operates the operation unit.

### [Support structure 37]

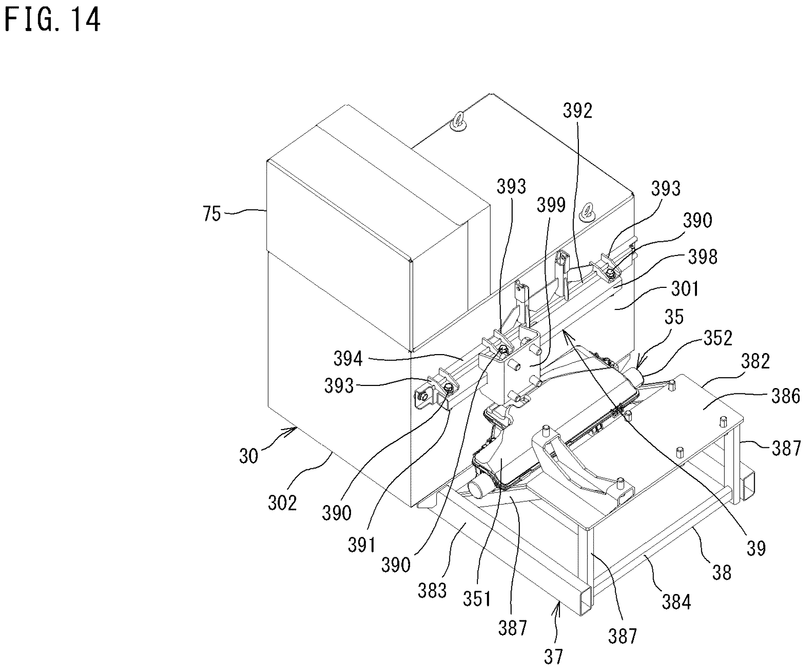

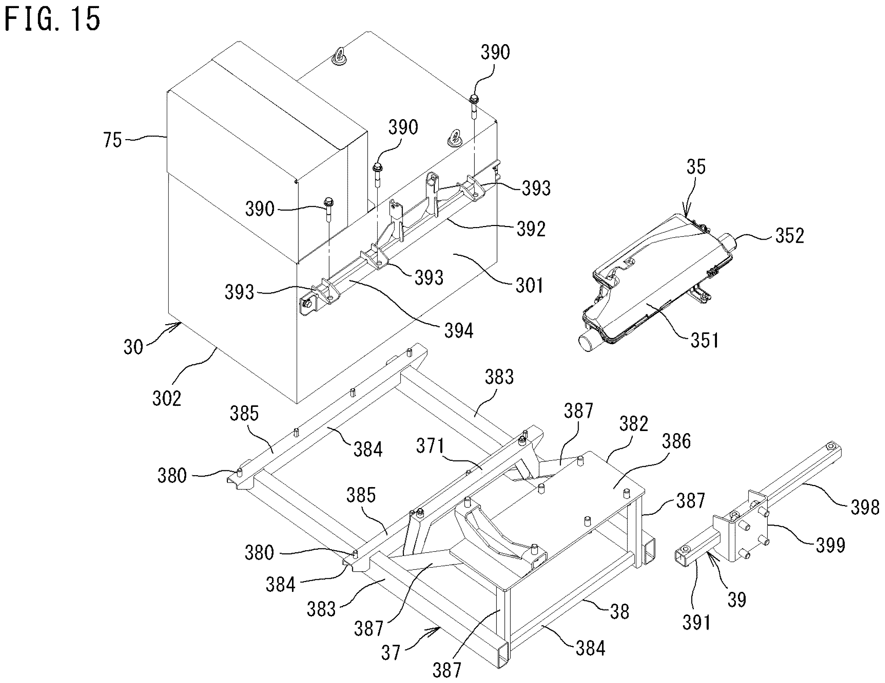

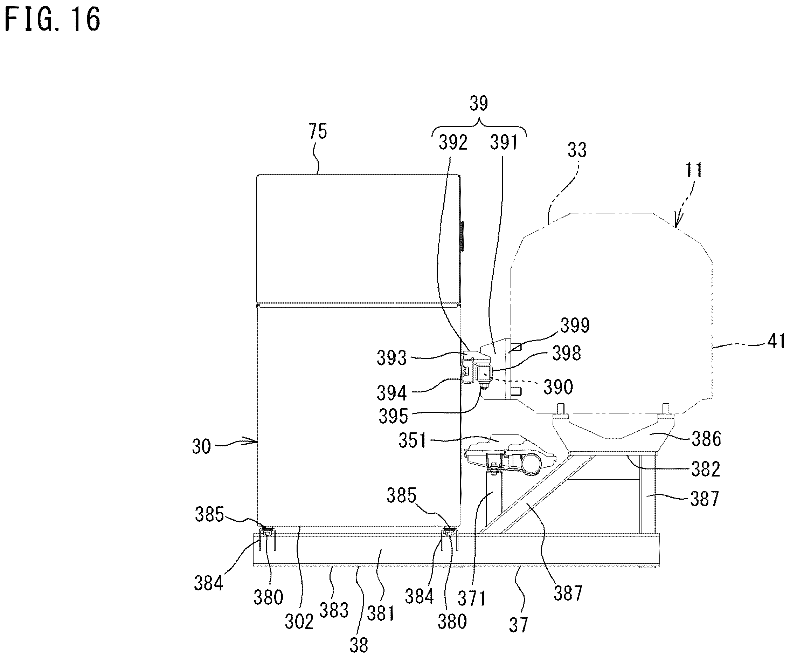

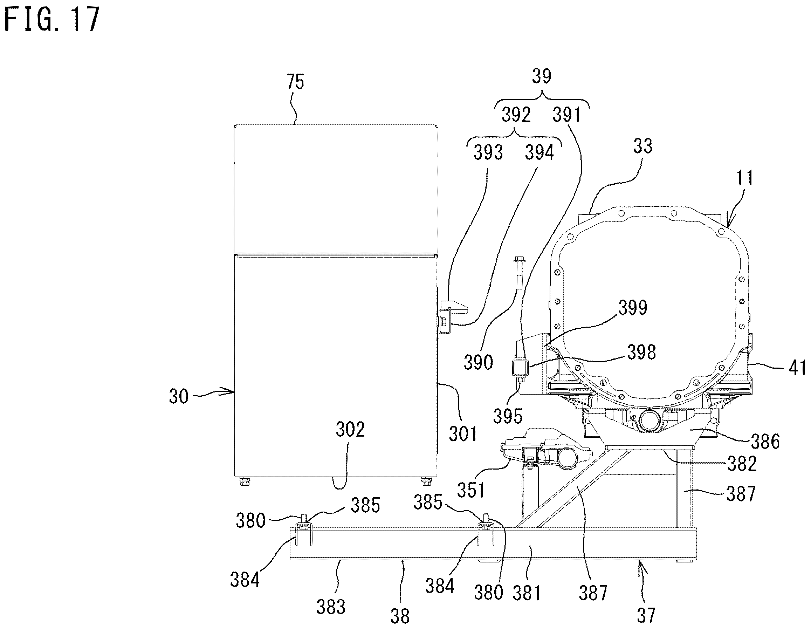

The support structure 37 (see FIG. 8) is a member with which the battery unit 30 is attached to the vehicle body 11 at a position outward of the vehicle body 11 in the vehicle-width direction. FIG. 14 is a perspective view of the battery unit 30 and the discharge pipe 351 supported by the support structure 37. FIG. 15 is an exploded perspective view of the battery unit 30, the discharge pipe 351, and the support structure 37. FIG. 16 is a front view of the battery unit 30 and the discharge pipe 351 supported by the support structure 37. FIG. 17 is a front view illustrating the support structure 37 and the battery unit 30 separated from the support structure 37.

The support structure 37 includes a lower support body 38 supporting the battery unit 30 from below, and a side support body 39 supporting the battery unit 30 from one side (the left side) in the vehicle-width direction. The side support body 39 holds a sidewall 301 of the battery unit 30 on the one side (the left side) in the vehicle-width direction. The lower support body 38 and the side support body 39 each include a plurality of steel members combined with each other by, for example, welding.

The battery unit 30 is located outward (rightward) of the vehicle body 11 in the vehicle-width direction. The battery unit 30 is supported from below by the lower support body 38, and is attached to the vehicle body 11 with the battery unit 30 held by the side support body 39 in the vehicle-width direction.

The side support body 39 (see FIGs. 15, 16, and 17) is divided into a fixed frame 391 and a detachable frame 392. More specifically, the side support body 39 includes the fixed frame 391, the detachable frame 392, and fastening members that are removable and are used for fastening the detachable frame 392 to the fixed frame 391. The fastening members are bolts 390 (first bolts).

In the present embodiment, the detachable frame 392 is fastened to the fixed frame 391 with the bolts 390 from above. The bolts 390 mesh with nuts 395 (see FIG. 17) fixed to a lower surface of the fixed frame 391. The nuts 395 are left on the fixed frame 391 even when the bolts 390 are removed. This configuration facilitates operation of fastening the bolts 390 again.

Before the battery unit 30 is attached to the support structure 37 (see FIG. 17), a component of the support structure 37 except the detachable frame 392 and the bolts 390 is fixed to the vehicle body 11. In the present embodiment, the component is fixed to a part (the gear case 33) of the chassis 41 of the vehicle body 11.

Before the battery unit 30 is attached to the support structure 37, the fixed frame 391 is previously fixed to the vehicle body 11 (the gear case 33), and the detachable frame 392 is also previously fixed to the sidewall 301 of the battery unit 30.

The bolts 390 are used for fastening the detachable frame 392, which is fixed to the battery unit 30, to the fixed frame 391, which is fixed to the vehicle body 11. The fastening using the bolts 390 is performed from above rather than from the central side in the vehicle-width direction (the right side in the example illustrated in FIG. 17). This configuration facilitates operation of attaching the battery unit 30 to the vehicle body 11.

In the present embodiment, the detachable frame 392 is fastened to the fixed frame 391 with the bolts 390 from above. Alternatively, the detachable frame 392 may be fastened to the fixed frame 391 with the bolts 390 from below or from the outside in the vehicle-width direction (the left side in the example illustrated in FIG. 17).

The fastening using the bolts 390 is performed with difficulty in a case where the fastening is performed from the central side in the vehicle-width direction (the right side in the example illustrated in FIG. 17). However, the fastening using the bolts 390 is performed with ease in a case where the fastening is performed from above, from below, or from the outside in the vehicle-width direction (the left side in the example illustrated in FIG. 17).

The junction box 75 is installed on the battery unit 30. The junction box 75 is an electrical connection box for relay connection and distribution of the electric power output from the battery unit 30. The junction box 75 is installed together with the battery unit 30 on the vehicle body 11 with the support structure 37.

The junction box 75 is attached to the battery unit 30 with a bolt (not illustrated). The junction box 75 is removable from the battery unit 30 by removing the bolt. The fastening using the bolts 390 is performed with ease through a space above the battery unit 30, the space being accessible by removing the junction box 75 from the battery unit 30.

The detachable frame 392 includes brackets 393 (see FIGs. 16 and 17) located above the fixed frame 391. Using the bolts 390, the brackets 393 can be fastened to the fixed frame 391 from above the brackets 393. The brackets 393 are located above the fixed frame 391 with the battery unit 30 mounted on the lower support body 38. Therefore, the fastening using the bolts 390 can be performed from above the brackets 393, with good workability.

Since the bolts 390 are removable, the battery unit 30 can be removed together with the detachable frame 392 from the vehicle body 11. This configuration facilitates maintenance of the battery unit 30.

The lower support body 38 includes a mount frame 381 where the battery unit 30 is mounted, and second fastening members that are removable. The second fastening members are bolts 380 (second bolts). Using the bolts 380, a lower wall 302 of the battery unit 30 can be fastened to the mount frame 381. The battery unit 30, which is mounted on the lower support body 38 (see FIG. 16), is fixed to the lower support body 38 with the bolts 380. The operator is able to perform fastening using the second bolts 380 from below. For the maintenance of the battery unit 30, the second bolts 380 are removable from the mount frame 381.

The battery unit 30 is positioned with the battery unit 30 fastened to the mount frame 381 with the second bolts 380. In the state in which the battery unit 30 is positioned, the detachable frame 392, which is fixed to the sidewall 301, and the fixed frame 391, which is fixed to the vehicle body 11, are in such a positional relationship that the detachable frame 392 can be fastened to the fixed frame 391 with the first bolts 390. In other words, holes in the brackets 393 of the detachable frame 392 and threaded holes in the nuts 395 fixed to the fixed frame 391 are aligned in the up-down direction.

As described above, when the battery unit 30, which is mounted on the mount frame 381 of the lower support body 38, is fastened to the mount frame 381 with the second bolts 380, the fixed frame 391 and the detachable frame 392, which have been divided, are in a state in which the fixed frame 391 and the detachable frame 392 are aligned for the fastening using the first bolts 390. This configuration facilitates the fastening using the first bolts 390.

Next, a further description will be given of the configuration of each component of the support structure 37.

As described above, the side support body 39 of the support structure 37 is divided into the fixed frame 391 and the detachable frame 392 (see FIG. 15).

The fixed frame 391 includes a fixing member 399 fixed to the vehicle body 11, and a first side pillar 398 integrated with the fixing member 399. The first side pillar 398 has a long shape extending in the vehicle front-rear direction.

The detachable frame 392 includes a second side pillar 394 disposed along the sidewall 301 of the battery unit 30 and fixed to the sidewall 301, and the plurality of brackets 393 integrated with the second side pillar 394. The brackets 393 are mounted on the first side pillar 398. The second side pillar 394 has a long shape extending in the vehicle front-rear direction. Using the bolts 390, the plurality of brackets 393 can be fastened to the first side pillar 398 from above the brackets 393.

The sidewall 301 of the battery unit 30 is elongated in the vehicle front-rear direction, and each of the first side pillar 398 and the second side pillar 394 is accordingly elongated in the vehicle front-rear direction. At the plurality of brackets 393 (three brackets 393 in the present embodiment) integrated with the second side pillar 394, the detachable frame 392 is fastened to the fixed frame 391 with the bolts 390. The brackets 393 are spaced apart from each other in the vehicle front-rear direction in a dispersed manner.

As described above (FIG. 8), the vehicle body 11 includes the chassis 41 elongated in the vehicle front-rear direction and located at the center in the vehicle-width direction. The lower support body 38 (see FIGs. 15, 16, and 17) of the support structure 37 includes a lower fixing member 382 fixed to a part of the chassis 41, a plurality of arms 383 (two arms 383 in the present embodiment), and a plurality of lower pillars 384 (three lower pillars 384 in the present embodiment).

In the present embodiment, the lower fixing member 382 includes an attachment frame 386 fixed to a part of the chassis 41, and a plurality of coupling pillars 387 extending downward from the attachment frame 386.

The arms 383 are coupled to the coupling pillars 387 constituting a part of the lower fixing member 382. The arms 383 are members extending outward in the vehicle-width direction from lower portions of the coupling pillars 387.

The lower pillars 384 are members connecting the plurality of arms 383 in the vehicle front-rear direction. The lower pillars 384 each have an upper surface serving as a mount surface 385 where the battery unit 30 is mounted. Each of the arms 383 may have an upper surface serving as the mount surface 385. In other words, the lower pillars 384 and/or the arms 383 each have, as the upper surface, the mount surface 385 where the battery unit 30 is mounted.

A load of the battery unit 30, which is a heavy object, is supported by the chassis 41 via the lower support body 38. The positions of the arms 383 are lowered by the coupling pillars 387, so that the position of the battery unit 30 can be lowered. This configuration contributes to lowering of the position of the center of gravity of the work vehicle 10.

The lower support body 38 supports the discharge pipe 351 in addition to the battery unit 30. Therefore, the lower support body 38 includes the auxiliary member 371 to which the discharge pipe 351 is attached. The auxiliary member 371 is a member for attaching the discharge pipe 351 at a position adjacent to the battery unit 30 in the vehicle-width direction. The discharge pipe 351 is fixed to the auxiliary member 371 with a bolt. The auxiliary member 371 is coupled to the coupling pillars 387.

According to the configuration of the lower support body 38, a space adjacent to the battery unit 30 is effectively used as a space for placement of the discharge pipe 351.

### [Others]

The installation frame 17, with which the tank 13 is installed on the vehicle body 11, does not necessarily include the second front frame portions 175. The members constituting the installation frame 17 may have shapes different from the illustrated shapes.

The filling unit 25 may have a shape different from the illustrated shape. Each of the rear pipe 22r connecting the filling unit 25 and the tank 13 and the front pipe 22g connecting the tank 13 and the fuel cell 24 may be guided along a path different from the illustrated path.

The discharge path 35 may have a shape different from the illustrated shape. The discharge pipe 351 is attached to a part of the support structure 37 supporting the battery unit 30. Alternatively, the discharge pipe 351 may be attached to the vehicle body 11, using another member different from the support structure 37.

The members constituting the support structure 37 may have shapes different from the illustrated shapes.

The foregoing embodiments are in all aspects illustrative and not restrictive. The scope of the present invention is defined by the claims rather than the foregoing embodiments, and includes all modifications within the scope of the configurations recited in the claims and their equivalences.

### REFERENCE SIGNS LIST

- 11: vehicle body
- 111: cover
- 112: opening
- 13: tank
- 17: installation frame
- 21: tank unit
- 21b: lower portion
- 22: pipe
- 22f: front pipe
- 22r: rear pipe
- 221: clamp member
- 222: flexible pipe
- 23: pipe region
- 24: fuel cell
- 25: filling unit
- 27: attachment portion

## Claims

1. A work vehicle comprising:
a vehicle body;
a tank unit including a tank configured to store hydrogen gas, the tank unit being disposed above the vehicle body;
a fuel cell installed on the vehicle body; and
a pipe for hydrogen gas, the pipe connecting the tank and the fuel cell,
wherein
the tank unit has a pipe region where the pipe connected to the tank passes, the pipe region being located in a lower portion of the tank unit.

2. The work vehicle according to claim 1, comprising
a front pipe, as the pipe, connected to the fuel cell via the pipe region in the lower portion and a front portion of the tank unit.

3. The work vehicle according to claim 1 or 2, comprising:
a filling unit; and
a rear pipe connected to the filling unit via the pipe region in the lower portion and a rear portion of the tank unit.

4. The work vehicle according to claim 2, wherein
the vehicle body includes a cover covering an installed component located near a front of the vehicle body, and
the cover has an opening through which the front pipe passes.

5. The work vehicle according to any one of claims 1 to 4, comprising
an installation frame with which the tank unit is installed on the vehicle body,
wherein
the installation frame includes a frame member having a pillar shape, and the pipe is attached along a part of the frame member.

6. The work vehicle according to claim 5, comprising
a clamp member with which the pipe is fixed to a part of the frame member.

7. The work vehicle according to claim 5, wherein
the frame member is a tubular member that is hollow, and
at least a part of the pipe passes through the tubular member.

8. The work vehicle according to claim 3, comprising
a frame coupled to the vehicle body,
wherein
the frame includes:
a clamp member with which the rear pipe is attached to a part of the frame; and
an attachment portion to which the filling unit is attached.

9. The work vehicle according to claim 8, wherein
the frame is a part of an installation frame with which the tank is installed on the vehicle body.

10. The work vehicle according to any one of claims 1 to 9, wherein
the pipe includes a flexible pipe as a part of the pipe.

11. The work vehicle according to any one of claims 1 to 10, comprising:
a filling unit for hydrogen gas, the filling unit being located rearward of the tank;
the fuel cell located forward of the tank;
a rear pipe connecting the filling unit and the tank; and
a front pipe connecting the tank and the fuel cell,
wherein
the pipe region for the rear pipe is located on a first side in a vehicle-width direction, and
the pipe region for the front pipe is located on a second side in the vehicle-width direction.
